# EUROPEAN PATENT APPLICATION

(11) **EP 4 442 738 A1**
(43) Date of publication of application: **09.10.2024**
(21) Application number: 22898207.0
(22) Date of filing: 14.09.2022
(51) Int. Cl.: C08J 3/16, C08B 16/00, C08J 3/02

(54) **CELLULOSE PARTICLES AND DISPERSION OF CELLULOSE PARTICLES**

(30) Priority: 29.11.2021 JP 2021192971
(71) Applicant: Daio Paper Corporation, Ehime 799-0492 (JP)
(72) Inventor: SASAKI, Hiroto, Shikokuchuo-shi, Ehime 799-0492 (JP)
(74) Representative: Meissner Bolte Partnerschaft mbB
(86) International application number: PCT/JP2022/034323
(87) International publication number: WO 2023/095422

(57) **Abstract**

Cellulose particles which are hard to be mutually aggregated, light in weight, and have improved dispersibility in oil-based liquid, as well as dispersion liquid of the cellulose particles are provided. The cellulose particles contain aggregates of fine cellulose fibers having an average fiber diameter of 1 to 1000 nm and an average fiber length of 0.01 to 1000 µm, and have a packed bulk density of 0.1 to 200 mg/cm³.

## Description

### FIELD OF ART

The present invention relates to cellulose particles and dispersion liquid of cellulose particles.

### BACKGROUND ART

Fine cellulose fibers obtained by making finer cellulose fibers, which constitute the basic skeleton of plants, have recently been a subject of researches for applications in various fields, with increasing environmental awareness, such as plastic free, and are expected to be utilized in such fields as plastic materials, cosmetics, clothing, and architecture beyond utilization of the functions of the material per se.

A technique focusing on dispersibility of fine cellulose fibers is disclosed in Patent Publication 1. Patent Publication 1 discloses a problem to be solved by the invention, which is to provide powdery nanofibers having improved dispersibility in a matrix component, such as resins, and a solution to the problem, which is powdery nanofibers containing a dispersant to which at least one member selected from the group consisting of a P-OH group, a -COOH group, a -SO₃H group, and/or metal salt groups thereof and an imidazoline group, is bonded.

Patent Publication 2 discloses a relevant technique, wherein a problem to be solved by the invention is to provide cellulose particles which have a reduced diameter, of which flexibility as well as touch and feel are paid attention to, and of which dermal irritation is reduced, and a solution to the problem is cellulose particles having an average particle size D50 of 1 µm or larger and 50 µm or smaller, a bulk density of 0.30 g/mL or lower, a specific volume of 3.0 mL/g or larger, and a linseed oil absorption of 100 mL/100 g or more. These cellulose particles are obtained from viscose prepared from dissolved natural pulp composed mainly of cellulose and combined with reinforcing fibers, which is made into cellulose sponge, and ground.

Patent Publication 3 discloses a technique relating to powder for cosmetics, wherein the porous cellulose particles have an improved sphericity and are hard to disintegrate.

### PRIOR ART PUBLICATION

### PATENT PUBLICATION

Patent Publication 1: JP 2017-210596 A
Patent Publication 2: JP 2019-206662 A
Patent Publication 3: JP 2020-50840 A

### SUMMARY OF THE INVENTION

### PROBLEMS TO BE SOLVED BY THE INVENTION

In the technique disclosed in Patent Publication 1, the matrix component is solid, such as resins, and the technique aims to improve dispersibility of nanofiber powder in solid. This publication does not disclose anything about whether, when the matrix component is liquid, the nanofiber powder mixes and disperses well in the liquid.

Further, in Patent Publication 2, use of the cellulose particles as an additive to makeup products is conceived, but no teaching is made as to what is used as a matrix component, and thus no disclosure is made as to dispersibility of the cellulose particles in liquid. Further, when the cellulose particles are used as an additive to makeup products, bulk density of the cellulose particles is assumed to affect dispersibility, which is yet to consider.

Patent Publication 3, like Patent Publication 2, teaches a proposal for improvement of sensation of use as well as touch and feel of cosmetics containing cellulose particles, but the disclosed powder cannot be improved in sedimentation property or dispersibility in a dispersed state.

Further, in the prior art, fine cellulose fibers were often taken for use in the form of an aqueous dispersion and, accordingly, such fine cellulose fibers had limited applications mostly in an aqueous medium.

The present invention has been made in view of the foregoing, and it is an object of the present invention to provide cellulose particles which have excellent dispersibility and are hard to sediment in an oil-based medium, and dispersion liquid of the cellulose particles.

### MEANS FOR SOLVING THE PROBLEMS

The above problem is solved by the following aspect.

Cellulose particles composed of aggregates of fine cellulose fibers having an average fiber diameter of 1 to 1000 nm and an average fiber length of 0.01 to 1000 µm, wherein the cellulose particles have a packed bulk density of 0.1 to 200 mg/cm³, as well as dispersion liquid of the cellulose particles dispersed in oil-based medium.

The cellulose particles according to the above aspect are formed of aggregates of the fine cellulose fibers having the average fiber diameter and the average fiber length of the above-mentioned ranges, wherein the fine cellulose fibers having a relatively high aspect ratio are assumed to be mutually entangled and hard to be loosened. With the packed bulk density of the above-mentioned range, the cellulose particles are light in weight relative to their volume, so that the cellulose particles dispersed in an oil-based dispersion medium and left to stand, are hard to sediment under their own weight and have excellent dispersion stability.

### EFFECT OF THE INVENTION

According to the present invention, there are provided cellulose particles, which are hard to aggregate mutually, light in weight, and have improved dispersibility in oil-based liquid, and dispersion liquid of the cellulose particles.

### BRIEF DESCRIPTION OF THE DRAWINGS

Fig. 1 is an explanatory view of a spray-type freeze granulator.
Fig. 2 is a SEM image of the cellulose particles.
Fig. 3 is a SEM image of the cellulose particles.
Fig. 4 is a SEM image of the cellulose particles.
Fig. 5 is a SEM image of the cellulose particles.

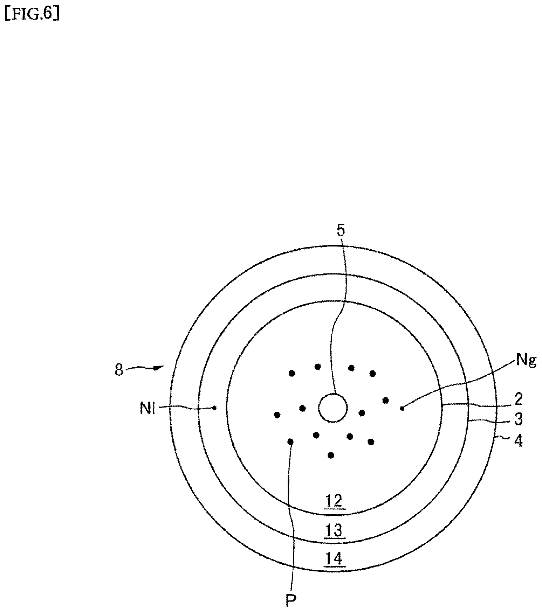

Fig. 6 is a cross-sectional view taken along lines Z-Z in Fig. 1.
Fig. 7 shows the results of the emulsification test.
Fig. 8 shows the results of Dispersibility Test 1.
Fig. 9 shows the results of Dispersibility Test 2.
Fig. 10 is a SEM image of the particles in Comparative Example 1.
Fig. 11 is a side view of a dryer unit according to another embodiment.
Fig. 12 illustrates the dryer unit of Fig. 11 seen from direction Y.

### EMBODIMENTS FOR CARRYING OUT THE INVENTION

Next, embodiments for carrying out the present invention will now be explained. Note that these embodiments are mere examples of the present invention, and the scope of the invention is not limited to the scopes of the embodiments.

The cellulose particles according to the present embodiment are composed of aggregates of fine cellulose fibers having an average fiber diameter of 1 to 1000 nm and an average fiber length of 0.01 to 1000 µm, and have a packed bulk density of 0.1 to 200 mg/cm³. Before the cellulose particles, discussion is made about fine cellulose fibers, which are a raw material of the cellulose particles.

### <Fine Cellulose Fibers>

The fine cellulose fibers may be obtained by defibrating (making finer) raw material pulp, and may be produced through a commonly known treatment, such as chemical treatment or mechanical treatment.

The raw material pulp for the fine cellulose fibers may be one or more members selected from the group consisting of, for example, wood pulp made from hardwood, softwood, or the like; non-wood pulp made from straw, bagasse, cotton, hemp, bast fibers, or the like; and de-inked pulp (DIP) made from brown waste paper, envelope waste paper, magazine waste paper, leaflet waste paper, corrugated waste paper, hard white waste paper, simili waste paper, ground wood waste paper, recovered used paper, waste paper, or the like. These various raw materials may be in the form of a ground product, such as those referred to as cellulose-based powder. As demands for products containing organic components, aiming at reduction of environmental burden, are recently increasing, wood pulp derived from plants, such as hardwood or softwood, rather than de-inked pulp, is preferred.

As the wood pulp, one or more members may be selected and used from the group consisting of, for example, chemical pulp, such as hardwood kraft pulp (LKP), softwood kraft pulp (NKP), sulfite pulp (SP), and dissolving pulp (DP), and mechanical pulp (TMP). In particular, chemical pulp, such as hardwood kraft pulp (LKP) and softwood kraft pulp (NKP), which are wood pulp containing higher cellulose components, is preferred, and bleached pulp (BKP) is particularly preferred.

As the mechanical pulp, one or more members may be selected and used from the group consisting of, for example, stone ground pulp (SGP), pressurized stone ground pulp (PGW), refiner ground pulp (RGP), chemi-ground pulp (CGP), thermo-ground pulp (TGP), ground pulp (GP), thermomechanical pulp (TMP), chemithermomechanical pulp (CTMP), refiner mechanical pulp (RMP), and bleached thermomechanical pulp (BTMP).

For production of fine cellulose fibers having a relatively small average fiber diameter, it is preferred to use kraft pulp, which is easy to defibrate and highly dispersible. In particular, when the fine cellulose fibers are to be used in white-colored products (emulsions, gel, or the like), it is advantageous that the fine cellulose fibers per se are white in color, and use of LBKP and NBKP is more preferred for improved whiteness.

The fine cellulose fibers may be pretreated prior to defibration. The pretreatment may be, for example, mechanical pre-beating of raw material pulp, or chemical modification of raw material pulp. The manner of pre-beating is not particularly limited, and a known technique may be employed.

Pretreatment of the raw material pulp by a chemical method may be, for example, hydrolysis of polysaccharides with acid (acid treatment), hydrolysis of polysaccharides with enzyme (enzyme treatment), swelling of polysaccharides with alkali (alkali treatment), oxidation of polysaccharides with an oxidizing agent (e.g., ozone) (oxidation treatment), reduction of polysaccharides with a reducing agent (reduction treatment), oxidation in the presence of TEMPO catalyst (oxidation treatment), anionization(anionization treatment) by phosphoesterification, carbamation(cationization treatment) by cationization, or the like .

As the alkali used in the alkali treatment, for example, sodium hydroxide, lithium hydroxide, potassium hydroxide, an ammonia aqueous solution, or organic alkali, such as tetramethylammonium hydroxide, tetraethylammonium hydroxide, tetrabutylammonium hydroxide, and benzyltrimethylammonium hydroxide may be used. In view of the manufacturing cost, sodium hydroxide is preferably used.

The enzyme treatment, acid treatment, or oxidation treatment may result in a lower water retention, a higher degree of crystallinity, and also higher homogeneity of the fine cellulose fibers. In this regard, fine cellulose fibers having a lower water retention are easily dewatered, which is preferred for easy drying.

The enzyme treatment, acid treatment, or oxidation treatment of the raw material pulp causes decomposition of the amorphous region of hemicellulose and cellulose in pulp, which leads to reduction of energy required for the treatment to make the raw material pulp finer, and to improvement in uniformity and dispersibility of cellulose fibers. Dispersibility of cellulose fibers serves, for example, to improve homogeneity of molded bodies. However, the pretreatment lowers the aspect ratio of fine cellulose fibers, so that it is preferred to avoid excessive pretreatment.

Examples of fine cellulose fibers modified with anionic functional groups introduced therein through anionization may include fine cellulose fibers esterified with phosphorus oxoacid, carbamated fine cellulose fibers, or fine cellulose fibers of which hydroxyl groups in the pyranose rings have directly been oxidized into carboxyl groups.

The fine cellulose fibers modified with anionic functional groups introduced therein have a relatively high dispersibility. This is assumed to be because the anionic functional groups cause locally biased charge, and easily form hydrogen bonding with water or organic solvents in the dispersion liquid.

By subjecting cellulose fibers to esterification with phosphorus oxoacid, which is an example of anionization, the raw material fibers may be made finer to result in fine cellulose fibers having a higher aspect ratio, excellent strength, higher light transmittance, and higher viscosity. The esterification with phosphorus oxoacid may be performed by, for example, the technique disclosed in JP 2019-199671 A. For example, modified fine cellulose fibers obtained by modifying the hydroxyl groups of the cellulose fibers to introduce phosphorous ester groups therein, may be used.

Defibration of cellulose fibers may be performed by means of the following defibration apparatus or method. That is, the defibration may be performed by employing one or more of the means selected and used from, for example, homogenizers, such as high-pressure homogenizers and high-pressure homogenizing apparatus, millstone friction machines, such as grinders and mills, refiners, such as conical refiners and disk refiners, and various bacteria. Defibration of cellulose fibers may preferably be performed by means of apparatus and method wherein the fibers are made finer in water streams, in particular, high pressure water streams. By means of such apparatus and method, significantly high dimensional uniformity and dispersion uniformity may be imparted to the resulting fine cellulose fibers. In contrast, by means of a grinder in which the fibers are ground between rotating grindstones, it is hard to uniformly make the cellulose fibers finer, and some fiber lumps may remain without being defibrated.

The grinder for used in the defibration of cellulose fibers may be, for example, Masscolloider manufactured by MASUKO SANGYO CO., LTD. The apparatus for making cellulose fibers finer in high-pressure water streams may be, for example, Star Burst (registered trademark) manufactured by SUGINO MACHINE LIMITED, or Nanovater (registered trademark) manufactured by YOSHIDA KIKAI CO., LTD. A high-speed rotary homogenizer that may be used in the defibration of cellulose fibers is CLEARMIX-11S manufactured by M TECHNIQUE CO., LTD.

The present inventors have found out that the fibers obtained by defibrating cellulose fibers in high-pressure water streams have more uniform fiber widths, compared, by microscopic observation, to the fibers obtained by defibrating cellulose fibers by grinding between rotating grindstones.

The defibration in high-pressure water streams may preferably be performed by pressurizing dispersion liquid of cellulose fibers in a pressure booster up to, for example, 30 MPa or higher, preferably 100 MPa or higher, more preferably 150 MPa or higher, particularly preferably 220 MPa or higher (high pressure conditions), and jetting the dispersion liquid through nozzles with a pore diameter of 50 µm or larger to release the pressure so that the pressure differential is, for example, 30 MPa or more, preferably 80 MPa or more, more preferably 90 MPa or more (reduced pressure conditions). Due to the cleavage phenomenon caused by this pressure differential, the pulp fibers are defibrated. With the pressure under the high pressure conditions being too low, or with the pressure differential between the high pressure conditions and the reduced pressure conditions being too small, the defibration efficiency is low, and repeated defibration (jetting through the nozzles) is required until the desired fiber width is achieved.

As the apparatus for defibration in high-pressure water streams, a high-pressure homogenizer is preferably used, which is a homogenizer capable of jetting a slurry of cellulose fibers at, for example, 10 MPa or higher, preferably 100 MPa or higher. By the treatment in a high-pressure homogenizer, the cellulose fibers are effectively defibrated through the actions of collision between cellulose fibers, pressure differential, microcavitation, or the like. In this way, the number of defibration treatments may be reduced to improve manufacturing efficiency of the fine cellulose fibers.

The high-pressure homogenizer preferably causes colinear, countercurrent collision of streams of a cellulose fiber slurry. Specifically, such a high-pressure homogenizer may be, for example, a countercurrent high-pressure homogenizer, MICROFLUIDIZER (registered trademark) (wet jet mill). In this apparatus, two upstream channels are provided so that two streams of a pressurized cellulose fiber slurry undergo countercurrent collision in a joint chamber. The streams of the cellulose fiber slurry collide in the joint chamber, and then flow out through a downstream channel. The downstream channel is provided at right angles to the upstream channels, forming together a T-junction. In such a high-pressure homogenizer of countercurrent collision type, the energy provided by the high-pressure homogenizer is converted maximally to the collision energy to realize more efficient defibration of cellulose fibers.

The fine cellulose fibers obtained through the defibration may be dispersed in an aqueous medium to prepare dispersion liquid, prior to mixing with inorganic fine particles. The aqueous medium is particularly preferably water in its entirety (aqueous solution), but aqueous medium partly containing another liquid compatible with water may also be used. Such another liquid may be, for example, a lower alcohol having 3 or less carbon atoms.

As used herein, fine cellulose fibers of which hydroxyl groups have been substituted (modified) to have phosphorus oxoacid ester groups introduced therein are referred to as modified fine cellulose fibers (sometimes referred to as modified CNF hereinbelow), and may sometimes be distinguished from unmodified fine cellulose fibers, wherein hydroxyl groups of the cellulose fibers have not been substituted (sometimes referred to as unmodified CNF hereinbelow). Thus, fine cellulose fibers conceptually include modified fine cellulose fibers and unmodified fine cellulose fibers.

The fine cellulose fibers constituting the cellulose particles according to the present embodiment may solely be the unmodified fine cellulose fibers or solely be the modified fine cellulose fibers, or may contain unmodified and modified fine cellulose fibers.

Where the cellulose particles are composed of the modified fine cellulose fibers, dispersion liquid of the cellulose particles in a dispersion medium takes on a transparent color, whereas where the cellulose particles are composed of the unmodified fine cellulose fibers, dispersion liquid of the cellulose particles in a dispersion medium takes on a white color. By adjusting the proportion of the modified and unmodified fine cellulose fibers in the fine cellulose fibers constituting the cellulose particles, dispersion liquid of an intermediate color between the white color and the transparent color may be prepared. For production of such dispersion liquid, for example, in the preparation of the dispersoid cellulose particles, a mixture of the modified and unmodified fine cellulose fibers may preferably be used as the raw material fine cellulose fibers for the cellulose particles.

The cellulose particles take on the form of white powder irrespective of whether the raw material is the modified or unmodified fine cellulose fibers. The modified fine cellulose fibers, which have a smaller average fiber diameter compared to that of the unmodified fine cellulose fibers, are formed into cellulose particles which tend to have a larger specific surface area compared to that of the cellulose particles of the same mass formed of the unmodified fine cellulose fibers.

The defibration of the raw material pulp is preferably carried out so that the physical properties or the like of the resulting fine cellulose fibers fall under the desired values or evaluations as will be discussed below.

### <Average Fiber Diameter>

The average fiber diameter of the fine cellulose fibers (average fiber width, or average of diameters of single fibers) is at most 1000 nm, preferably 500 nm or smaller, more preferably 100 nm or smaller, particularly preferably 50 nm or smaller. With an average fiber diameter of the fine cellulose fibers over 1000 nm, relatively small specific surface area is imparted to the resulting cellulose particles, which are thus less porous. On the other hand, the lower limit of the average fiber diameter of the fine cellulose fibers is not particularly limited.

The average fiber diameter of fine cellulose fibers may be adjusted by, for example, selection, pretreatment, or defibration of the raw material pulp.

The average fiber diameter of the fine cellulose fibers is determined as follows.

First, 100 ml of an aqueous dispersion of the fine cellulose fibers having a solid concentration of 0.01 to 0.1 mass% is filtered through a TEFLON (registered trademark) membrane filter, and subjected to solvent substitution once with 100 ml of ethanol and three times with 20 ml of t-butanol. Then the resulting mass is lyophilized and coated with osmium to obtain a sample. An electron microscopic SEM image of this sample is observed at a magnification of 3000 to 30000 folds, depending on the width of the constituent fibers. Specifically, two diagonal lines are drawn on the observation image, and three arbitrary straight lines passing the intersection of the diagonals are drawn. Then, the widths of a total of 100 fibers crossing these three straight lines are visually measured. The median diameter of the measured values is taken as the average fiber diameter.

### <Average Fiber Length>

The average fiber length (average of lengths of single fibers) of the fine cellulose fibers is, for example, preferably 0.01 to 1000 µm, more preferably 0.03 to 500 µm. With an average fiber length over 1000 µm, the fine cellulose fibers are easily entangled in drying, and hard to be loosened in dispersing in an oil-based dispersion medium. However, with this average fiber length, the fine cellulose fibers are vulnerable to carrying other substances, which imparts functionalities of such other substances to the cellulose particles. With an average fiber length of the fine cellulose fibers below 0.01 µm, cellulose particles result wherein the fibers are poorly entangled.

The average fiber length may arbitrarily be adjusted by, for example, selection, pretreatment, or defibration of the raw material pulp.

The average fiber length of the fine cellulose fibers may be determined in the same way as for the average fiber diameter, i.e., the length of each fiber is measured visually, and the median diameter of the measured values is taken as the average fiber length.

### <Aspect Ratio>

The aspect ratio of the fine cellulose fibers (average fiber length divided by average fiber width) is preferably 10 to 1000000, more preferably 30 to 500000, particularly preferably 50 to 100000. With an aspect ratio of the fine cellulose fibers below 10, the cellulose component is in the form of almost particles, and thus is hard to be formed into the cellulose particles. With an aspect ratio over 1000000, the fibers are highly entangled to make it hard to impart a desired average particle size to the resulting cellulose particles.

<Degree of Crystallinity>

The degree of crystallinity of the fine cellulose fibers is preferably at least 50 or higher, more preferably 60 or higher, particularly preferably 70 or higher, and preferably at most 100 or lower, more preferably 95 or lower, particularly preferably 90 or lower. At a degree of crystallinity below 50, entanglement of the fibers is weakened by the impact of temperature changes during drying or the like, which makes the fibers less capable of holding other substances, and makes it hard to impart a desired average particle size to the resulting cellulose particles.

The degree of crystallinity refers to a value determined by X-ray diffraction in accordance with JIS K0131 (1996) "General Rules for X-ray Diffraction Analysis". Note that fine cellulose fibers have amorphous regions and crystalline regions, and the degree of crystallinity refers to the ratio of the crystalline regions with respect to the entire fine cellulose fibers.

### <Pseudo Particle Size Distribution>

The pseudo particle size distribution curve of the fine cellulose fibers preferably has one peak. With one peak, the fine cellulose fibers have high uniformity in fiber length and fiber diameter, and are ready to be mutually entangled in the production of the cellulose particles, so that the resulting cellulose particles are hard to be disintegrated in redispersion. Further, the cellulose particles have a smaller variation in particle diameter. In the form of cellulose particles carrying inorganic fine particles, the cellulose particles, when blended into cosmetics as one of the components thereof, are well-dispersed in the cosmetics.

The peak value of the pseudo particle size distribution curve of the fine cellulose fibers is determined in accordance with ISO-13320 (2009). Specifically, a volume-based particle size distribution of an aqueous dispersion of the fine cellulose fibers is determined using a particle size distribution measuring device (laser diffraction/scattering-type particle size distribution measuring apparatus manufactured by SEISHIN ENTERPRISE CO., LTD.). From the obtained distribution, the mode for the diameter of the fine cellulose fibers is determined, and is taken as the peak value. It is preferred that the pseudo particle size distribution curve of the fine cellulose fibers in the form of an aqueous dispersion measured by laser diffraction, preferably has a single peak. In this way, the fine cellulose fibers with a single peak have been made sufficiently finer and may exhibit good properties as fine cellulose fibers, which is preferred. The peak value of the pseudo particle size distribution curve of the fine cellulose fibers with the single peak is, for example, preferably 300 µm or less, more preferably 200 µm or less, particularly preferably 100 µm or less. With a peak value over 300 µm, the fine cellulose fibers may have a larger amount of relatively large fibers, and impart a larger variation in particle size to the resulting cellulose particles, and the shape of the cellulose particles tends to be non-uniform.

The peak value of the pseudo particle size distribution curve and the median diameter of the distribution of the fine cellulose fibers may be adjusted by, for example, selection, pretreatment, or defibration of the raw material pulp.

### <Water Retention Degree>

The water retention degree of the fine cellulose fibers is not particularly limited and, for example, the water retention degree of the unmodified fine cellulose fibers is 500% or lower, more preferably 100 to 500%. At a water retention degree over 500%, the fine cellulose fibers per se have a high water retention degree and thus a poor dewaterability, so that even the fine cellulose fibers are processed through a drying step, the drying step may require a prolonged period of time, which deteriorates productivity. The lower limit of the water retention degree of the fine cellulose fibers is not particularly limited, and is preferably 1000 or higher, in which range the binding force works among the fine cellulose fibers to facilitate maintenance of the porous particle form.

The water retention degree of the fine cellulose fibers may arbitrarily be adjusted by, for example, selection, pretreatment, or defibration of the raw material pulp.

The water retention degree of the fine cellulose fibers refers to a value determined in accordance with JAPAN TAPPI No. 26 (2000).

### <Pulp Viscosity>

The pulp viscosity of the defibrated fine cellulose fibers is 1 to 10 cps, more preferably 2 to 9 cps, particularly preferably 3 to 8 cps. The pulp viscosity refers to a viscosity of a solution of cellulose in a cupriethylenediamine solution, and a higher pulp viscosity represents a higher degree of polymerization of the cellulose. The pulp viscosity also affects the strength of fibers per se.

### <Additive>

An additive may be added for improving dispersibility, in a solvent, of the cellulose particles produced through a drying step. The additive may be added to the fine cellulose fibers before freezing, and preferably mixed into a homogenous mixture. The additive may be one or more members selected from the group consisting of polyhydric alcohols, polysaccharides, and water-soluble high polymers. The blending ratio of the additive (additive : fine cellulose fibers) may be 1:99 to 50:50, preferably 50:50, in terms of solids. At too high a ratio of the additive with respect to the fine cellulose fibers, sticky, dried product (cellulose particles) results, and the light-weight feel of the cellulose particles of the present invention will be lost, and the handling property is deteriorated. At too low a ratio of the additive, dispersing effect of the object into the solvent may be deteriorated.

The polyhydric alcohols as the additive may be glycerin, propylene glycol, butylene glycol, pentanediol, dipropylene glycol, hexanediol, or heptanediol, but are not limited to these. Glycerin is particularly preferred for its thickening property and ability to disperse composite particles.

The polysaccharides may be quince seed, Veegum, xanthan gum, hyaluronates, or the like, but are not limited to these. Hyaluronates are particularly preferred for its thickening property and ability to disperse cellulose particles.

The water-soluble high polymers may be polyvinyl alcohol, polyvinyl pyrrolidone, carboxyvinyl polymer, or polyethylene glycol, but are not limited to these. Polyvinyl pyrrolidone is particularly preferred for its thickening property and ability to disperse cellulose particles.

### <Inorganic Fine Particles>

The cellulose particles may contain inorganic fine particles. The inorganic fine particles may impart various functions to the cellulose particles. For example, metal-based inorganic fine particles, which function to diffusely reflect incident light, may give the cellulose particles, by being contained therein, the effect of diffusely reflecting light. For example, the cellulose particles containing the inorganic fine particles may be added to cosmetics as one of the components thereof, to impart a sunlight transmission-blocking effect to the cosmetics. Application of cosmetics having the sunlight transmission-blocking effect to the skin provides sunscreen effect.

The content percentage of the inorganic fine particles in the cellulose particles may be at most 50 mass%, preferably 45 mass% or lower, and at least 0 mass%, preferably 5 mass% or higher. At a content percentage over 50 mass%, the proportion of the inorganic fine particles to the fine cellulose fibers is too high and thus the specific gravity of the cellulose particles is too high, so that redispersibility of the cellulose particles in a dispersion medium may be impaired. At a content percentage of 5 mass% or higher, the inorganic fine particles fully exhibit the sunlight transmission-blocking effect.

The primary particle size of the inorganic fine particles may be at most 10 µm, preferably 5 µm or smaller, more preferably 1 µm or smaller. With a primary particle size over 10 µm, the inorganic fine particles may be hard to be carried by the fine cellulose fibers, and the surface area of the cellulose particles may not be sufficiently large. The lower limit of the primary particle size of the inorganic fine particles is not particularly limited, and may be 1 nm, preferably 2 nm or larger, more preferably 3 nm or larger. With a primary particle size of 1 nm or larger, the inorganic fine particles, when mixed in a slurry of the fine cellulose fibers, may disperse and easily be entangled with the fine cellulose fibers.

The primary particle size of the inorganic fine particles may be measured by electron microscopic observation, and the average of the obtained particle sizes is taken as the measured value.

The inorganic fine particles may of course be used as they are, but may preferably be subjected to hydrophilization for increasing affinity to an aqueous dispersion of the fine cellulose fibers. A surface treatment agent for the hydrophilization may restrain the surface activity of the inorganic fine particles, and improve dispersibility as well as transparency and squeaking, of the inorganic fine particles. The surface treatment agent for the inorganic fine particles is not particularly limited as long as it is dispersible in an aqueous dispersion of the fine cellulose fibers, and may preferably contain silicic anhydride or hydrated silica.

The inorganic fine particles may be any known inorganic fine particles without limitation, for example, barium titanate, lead zirconate titanate, silicon carbide, silicon nitride, aluminum nitride, alumina, zirconia, zircon, titanium oxide, zinc oxide, iron oxide, or cerium oxide. Powder of these, in combination with the cellulose particles containing the fine cellulose fibers, is preferred for its redispersibility in liquid. For blocking sunlight transmission, one or a combination of two or more members may be selected and used from the group consisting of titanium oxide, zinc oxide, iron oxide, and cerium oxide. In particular, rutile-type titanium oxide as the inorganic fine particles is preferred for improved blocking of sunlight transmission in a cosmetic composition.

The shape of the inorganic fine particles that may be contained in the cellulose particles is not particularly limited, and may be, for example, spherical, rod-shaped, needle-shaped, spindle-shaped, plate-shaped, or polygonal.

The inorganic fine particles may be adhered to the surfaces of the fine cellulose fibers in the cellulose particles, or enclosed in the fine cellulose fibers. With the inorganic fine particles enclosed in the fine cellulose fibers, the inorganic fine particles may be carried not only on the surfaces of, but also inside the cellulose particles, so that excellent blocking of transmission may be achieved against sunlight irradiation from various angles. Here, the term "enclosed" means that the surfaces of the inorganic fine particles are partly covered with the fine cellulose fibers, or the inorganic fine particles are covered with the fine cellulose fibers and not observable when observed from the outside.

The inorganic fine particles may be added to the fine cellulose fibers before freezing, and preferably mixed into a homogenous mixture.

### <Cellulose Particles>

The cellulose particles according to the present embodiment are formed by drying the fine cellulose fibers and, in the microscopic sense, some are formed by the fine cellulose fibers being dried individually and aggregated (to use a metaphor, individual strands are entangled in a thread), and some are formed by a plurality of the fine cellulose fibers being aggregated upon drying into lumps. As the fine cellulose fibers have hydroxyl groups (OH groups) and hydrogen groups (H groups) in their structural unit cellulose, the cellulose particles containing the fine cellulose fibers also have the hydroxyl groups (OH groups) and the hydrogen groups (H groups). Through hydrogen bonding of the hydroxyl groups or the hydrogen groups with other hydroxyl groups or hydrogen groups, the fine cellulose fibers aggregate in themselves or mutually due to the hydrogen bonding to form the cellulose particles. The cellulose particles, upon mixing into an aqueous medium, undergo hydrolyzation or the like and the hydrogen bonding is dissociated, which leads to weakening of the cellulose aggregation, resulting in dispersing of cellulose particles and loosened fine cellulose fibers into the aqueous medium. On the other hand, mixing the cellulose particles into an oil-based medium, rather than an aqueous medium, would result as follows. Due to hydrophobicity of an oil-based medium, reaction toward loosening of the aggregate of the cellulose particles is hard to be caused. Thus, for the cellulose particles being dispersed in the oil-based medium and maintained in that state, the bulk density of the cellulose particles preferably falls within a predetermined range. With the bulk density within a predetermined range, the cellulose particles are not vulnerable to compaction and sedimentation under their own weight.

The cellulose particles according to the present embodiment contain preferably 50 mass% or more, more preferably 60 mass% or more, still more preferably 70 mass% or more fine cellulose fibers, and may contain the maximum of 100 mass% fine cellulose fibers. With a mass percentage of the fine cellulose fibers in the cellulose particles below 50 mass%, the desired bulk density and specific surface area of the cellulose particles according to the present invention may not be achieved.

### <Average Particle Size>

The cellulose particles according to the present embodiment have an average particle size of preferably 0.1 to 1000 µm, more preferably 0.1 to 700 µm, still more preferably 0.1 to 500 µm. Cellulose particles provide the effects of the present invention even with an average particle size below the above-mentioned range, but preferably have an average particle size of or above the minimum of the above-mentioned range for easy handling. With an average particle size of the cellulose particles over the above-mentioned range, larger gaps are left among the particles in packing the cellulose particles or dispersing the cellulose particles in a dispersion medium, which makes it difficult to adjust the concentration to a desired value.

The standard deviation of the particle size of the cellulose particles is preferably 1 to 400 µm, more preferably 1 to 300 µm, particularly preferably 2 to 200 µm.

The cellulose particles according to the present embodiment characteristically have a variety of particle sizes from small to large. Specifically, the diversity of the particle size of the cellulose particles (or a group of cellulose particles) is wide, that is, dispersion coefficient of the particle size is large. Note that the cellulose particles do not have superior sphericity, and individual particles have irregular surfaces, porosity, and different shapes. Thus, it may be difficult to intentionally separate large and small particles with a sieve or the like.

The average particle size, median size, 10% cumulative diameter, and 90% cumulative diameter of the cellulose particles are measured using a measuring device in accordance with ISO-13320 (2009), specifically, laser diffraction/scattering-type particle size distribution measuring apparatus LA-960V2 by a dry method without extracting water attached to the cellulose particles.

### <Specific Surface Area>

The specific surface area of the cellulose particles is preferably 20 m²/g or larger, more preferably 30 m²/g or larger, still more preferably 40 m²/g or larger, and the upper limit is not particularly limited and may be 5000 m²/g. With a specific surface area below 20 m²/g, the cellulose particles may carry the inorganic fine particles only in a small amount, and functions of the inorganic fine particles may not be exhibited. On the other hand, the cellulose particles with a specific surface area over 5000 m²/g are preferred for their light weight and redispersibility, but are extremely hard to be produced.

The specific surface area is determined by the BET method. Specifically, the measurement is carried out by means of measuring apparatus, NOVA 4200e manufactured by QUANTACHROME INSTRUMENTS, with N₂ adsorption. The testing method is in accordance with JIS Z8830: 2013.

### <Moisture Percentage>

The moisture percentage of the cellulose particles is preferably 50% or lower, more preferably 40%, still more preferably 30% or lower. At a moisture percentage over 30%, the cellulose particles contain too large an amount of adsorbed moisture, and even if mixed and dispersed in an oil-based dispersion medium, may not maintain the dispersed state.

### <Bulk Density>

The bulk density of the cellulose particles according to the present embodiment is preferably 0.1 to 200 mg/cm³, more preferably 0.1 to 150 mg/cm³, still more preferably 0.1 to 100 mg/cm³ in packed bulk density. Cellulose particles with a packed bulk density over 200 mg/cm³ are in the form of aggregates of firmly entangled fibers with poor dispersibility. Such cellulose particles, even if dispersed in a dispersion medium, may start to sediment under their own weight, and thus cannot be said to have good dispersibility. With a packed bulk density below 0.1 mg/cm³, the cellulose particles are prone to disintegration in air, and poor in handling property.

On the other hand, the loose bulk density, the packed bulk density, and the compressibility of the cellulose particles according to the present embodiment have the relation represented by Formula 1: Compressibility (%) = (Packed Bulk Density - Loose Bulk Density) / Packed Bulk Density × 100

The packed bulk density and the loose bulk density are among the items used for calculation of Carr indices for fluidity, and determined in accordance with ASTM D6393-99 "Measurement of Compressibility". The measurement is made using "Multiple Powder Characteristics Analyzer Multi Tester MT-02" manufactured by SEISHIN ENTERPRISE CO., LTD.

### <Compressibility>

The cellulose particles have a compressibility of preferably 50% or lower, more preferably 40% or lower, still more preferably 30%. Since the cellulose particles according to the present embodiment are relatively light in weight, only the gaps among the particles are filled during compaction for the measurement of packed bulk density after the measurement of loose bulk density (i.e., by filling the gaps, the container is densely filled with the cellulose particles), whereas the change in density of the cellulose particles per se is small, which hardly results in deterioration of the particle shape. Further, the cellulose particles are not spherical with superior sphericity, but have irregular surfaces (though difficult to express) and porous, so that when a container is charged with the cellulose particles, a number of gaps of various sizes and shapes result. A compressibility over 50% implies not only the filling of the gaps among the particles, but also deterioration of the cellulose particles, so that the light-weight feel of the particles may be lost. Further, in the cellulose particles produced through hot drying, the fibers firmly aggregate to form solid particles, so that only the filling of the gaps among the particles occurs, whereas the deterioration of the particles per se hardly occurs. The gaps formed among the cellulose particles may conceptually be understood by imagining the gaps among the atoms packed in a unit lattice. On the other hand, the minimum compressibility of the cellulose particles is not particularly limited (i.e., 0%), and may be 1% or more in view of the above-mentioned gaps slightly formed.

### <Production>

The cellulose particles may be produced from cellulose nanofibers as a raw material, by lyophilizing, drying under reduced pressure, drying under heating, spray drying, or by spray freezing and drying under reduced pressure, which is the method of drying the cellulose particles according to the present embodiment, and in particular, the spray freezing and drying under reduced pressure results in porous cellulose particles, which is preferred. With the porous property, the cellulose particles may have other substance carried in the number of pores formed therein, or their large surface area may be utilized. In this way, properties not inherent in cellulose may be imparted to the cellulose particles.

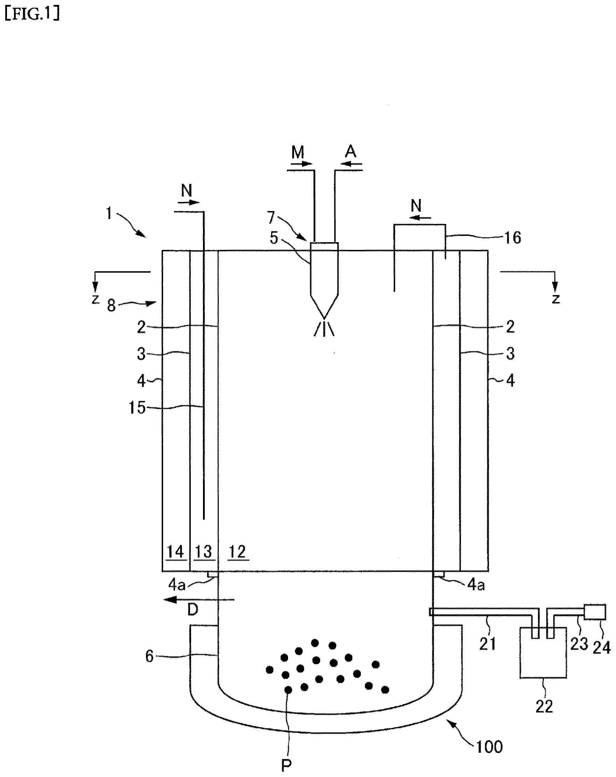

The cellulose particles according to the present invention may be produced through lyophilizing treatment, and, for example, the spray-type freeze granulator 1 as shown in Fig. 1 is preferred for production of particles having a relatively low specific gravity. The spray-type freeze granulator 1 has freeze granulation chamber 8, atomizer section 7 for spraying raw material M into the upper part of the freeze granulation chamber 8, and drying section 6 disposed below the freeze granulation chamber 8 for drying the frozen cellulose particles. The raw material M atomized in the freeze granulation chamber 8 is instantaneously frozen in the freeze granulation chamber 8 into frozen bodies P. The frozen bodies P fall freely into the drying section 6 and collect therein. The drying section 6 is in detachable connection to the freeze granulation chamber 8 and, when the frozen bodies P collect therein, is detached from the freeze granulation chamber 8, hermetically sealed, and subjected to drying of the frozen bodies P, to thereby obtain the cellulose particles.

The raw material M may be a slurry or dispersion liquid of the fine cellulose fibers. The fine cellulose fibers used as the raw material M may be a group of fine cellulose fibers, or a combination of two groups of fine cellulose fibers. The combination of two groups of fine cellulose fibers may be a mixture of group C1 of fine cellulose fibers having an average particle size R of 11 to 1000 nm and group C2 of fine cellulose fibers having an average particle size R of 1 to 10 nm at a mixing ratio of 1:99 to 99:1.

The atomizer section 7 has a raw material line through which the raw material M is fed, a compressed gas line through which compressed gas A is fed, and a nozzle 5 for atomizing a mixed fluid of the supplied raw material M and the supplied compressed gas A into the freeze granulation chamber 8 (also referred to as a two-fluid nozzle). The nozzle 5 may be in the form of a three-fluid nozzle, a four-fluid nozzle, a pressurized nozzle, an ultrasonic nozzle, or a centrifugal atomizing nozzle.

The raw material line is connected at its base end to a raw material tank in which the raw material M is stored, and is configured to flow the raw material M therethrough from the raw material tank into the nozzle 5 by means of a pump provided in the raw material line. The compressed gas line is connected at its base end to a compressed-gas-supply unit, including a compressor, a cylinder, and the like, and is configured such that, by activating the compressed-gas-supply unit, the compressed gas flows into the nozzle 5. The compressed gas may be, for example, air, nitrogen, or a noble gas.

The raw material M may contain, in addition to the fine cellulose fibers, an additive and/or inorganic fine particles, and further optionally a plasticizer, such as phthalic acid esters or citric acid esters.

The freeze granulation chamber 8 is composed of three chambers, specifically, three cylinders of different diameters arranged coaxially around a common vertical axis. These three cylinders are referred to, from the innermost outwards, as an inner chamber wall 2, an intermediate chamber wall 3, and an outer chamber wall 4, and an inner chamber defined by the inner chamber wall 2 is a freezing chamber 12 for freezing the raw material M, a bottomed intermediate chamber defined by the inner and intermediate chamber walls 2 and 3 is a coolant reservoir chamber 13 containing a cooling medium, and a bottomed outer chamber defined by the intermediate and outer chamber walls 3 and 4 is a vacuum-insulated chamber 14 for maintaining the temperature inside the chamber constant. The freezing chamber 12 may preferably be detachably connected at the lower edge of the inner chamber wall 2 to a flange 4a formed at the top edge of the drying section 6.

In the freezing chamber 12, the raw material M atomized through the nozzle 5, which is disposed near the top face of the chamber 12, is frozen into the frozen bodies P. The freezing chamber 12 is preferably maintained at a temperature of -10 °C to -200 °C by means of a cooling medium supplied from the coolant reservoir chamber 13.

The coolant reservoir chamber 13 contains a cooling medium for colling the freezing chamber 12. The cooling medium may be, for example, liquid nitrogen, liquid argon, liquid helium, or dry ice.

The vacuum-insulated chamber 14 is defined by the intermediate chamber wall 2 and the outer chamber wall 4, with the upper ends of the intermediate and outer chamber walls 2 and 4 closed together and the lower ends of the intermediate and outer chamber walls 2 and 4 closed together, so that the vacuum-insulated chamber 14 is blocked against fluid flowing from outside and maintained in a vacuum, so that heat transfer between the cooling medium contained in the coolant reservoir chamber 13 and the external air is hard to occur.

The coolant reservoir chamber 13 is equipped with a coolant feed pipe 15 extending from outside into the coolant reservoir chamber 13 for feeding a cooling medium N into the coolant reservoir chamber 13, and a coolant introduction pipe 16 for introducing into the freezing chamber 12 a cooling medium gas formed by gasification of the cooling medium N contained in the coolant reservoir chamber 13.

The frozen bodies P produced in the freeze granulation chamber 8 is stored in the drying section 6, which is in detachable connection to the freeze granulation chamber 8. After a predetermined amount of the frozen bodies P collect in the drying section 6, the drying section 6 is detached from the freeze granulation chamber 8, hermetically sealed, and subjected to lyophilization to obtain the cellulose particles. The structure of a dryer unit 100 according to the present embodiment is discussed below.

A dryer unit 100 includes the drying section 6 and a vacuuming mechanism. The drying section 6 may be configured to have a cylindrical wall having its axis extending vertically, and a bottom continued from the wall. The cylindrical wall may be provided with an openable/closable exhaust port (not shown), through which the gas in the drying section 6 may be discharged as an exhaust gas D. The upper edge of the cylindrical wall has been formed into a flange 4a, and is detachably connected to the lower edge of the freeze granulation chamber 8. The frozen bodies P produced in the freeze granulation chamber 8 fall into the drying section 6, which is then detached from the freeze granulation chamber 8, covered with a lid over the flange 4a, hermetically sealed, and subjected to lyophilization of the frozen bodies P.

The frozen bodies P may be dried in the following manner. The drying section 6 is configured to receive a vacuuming gas pipe 21 connected at a base end thereof, and the gas drawn out through the gas pipe 21 is led to a cold trap 22 connected to the other end of the gas pipe 21, wherein part of the gas is condensed and separated as a condensed liquid or solid, whereas the remaining gas is drawn by a vacuum pump 24 provided at one end of a gas pipe 23, which is connected at the other end to the cold trap 22. By activating the vacuum pump 24 with the drying section 6 hermetically sealed, while the pressure in the drying section 6 is decreased, sublimable or vaporizable substances contained in the frozen bodies P (e.g., water, when the raw material M is dispersion liquid of fine cellulose fibers in water) are sublimated or vaporized and drawn by the vacuum pulp 24, with the remaining being cellulose particles. During the drying treatment, the drying unit 6 may be subjected to swinging or shaking in order not to mutually aggregate the frozen bodies P or in order to evenly dry the individual frozen bodies P. The shaking or swinging of the drying section 6 may be performed manually or by means of a shaking or swinging mechanism. For shaking, the drying section 6 may be held at diametrically opposed ends (4a, 4a in Fig. 1) of the generally annular flange, and shaken from side to side, whereas for swinging, the drying section 6 may be rotated clockwise and counterclockwise alternately and repeatedly around the diameter of the flange as a rotation axis. The pivot angle of the clockwise or counterclockwise rotation is not particularly limited, and may be 30 ° to 100 °, for which angle the frozen bodies P in the drying section 6 may be well rocked. The drying treatment may not require the swinging or shaking, and may be carried out by vacuum drying with the frozen bodies P kept stationary. Though it depends, the bulk density of the cellulose particles to be produced could be relatively high with the swinging or shaking during the drying.

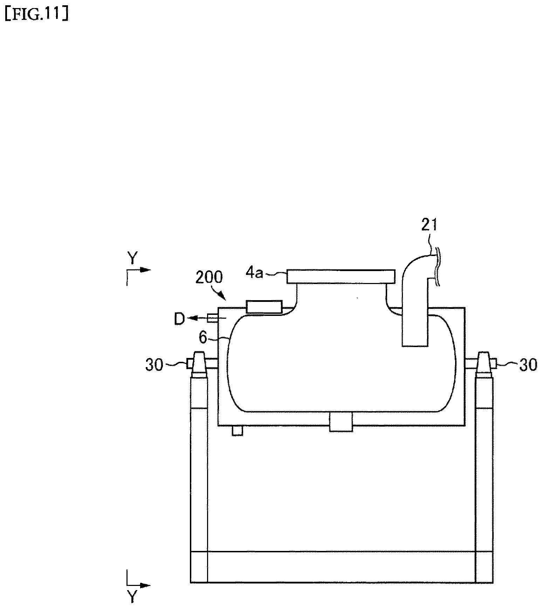

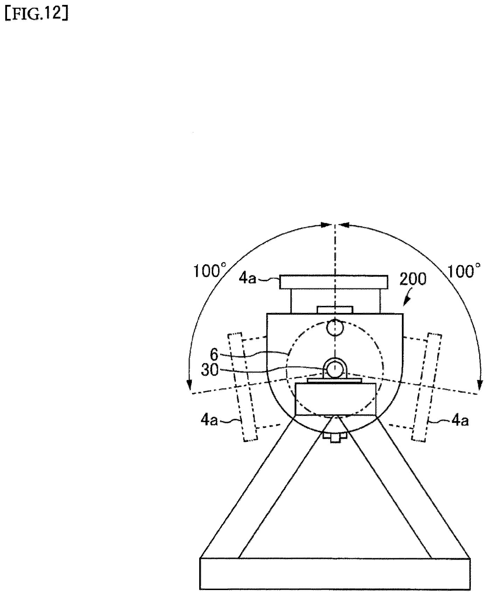

A dryer unit 200 according to another embodiment is discussed with reference to Figs. 11 and 12. The dryer unit 200 differs from the dryer unit 100 of Fig. 1 discussed above in that the dryer unit 200 is provided with an axis 30 around which the drying section 6 is to be swung. The drying section 6 may be configured, by providing a swinging mechanism, to rotate around the axis 30, for example, for 100 ° clockwise or counterclockwise as seen in Fig. 12.

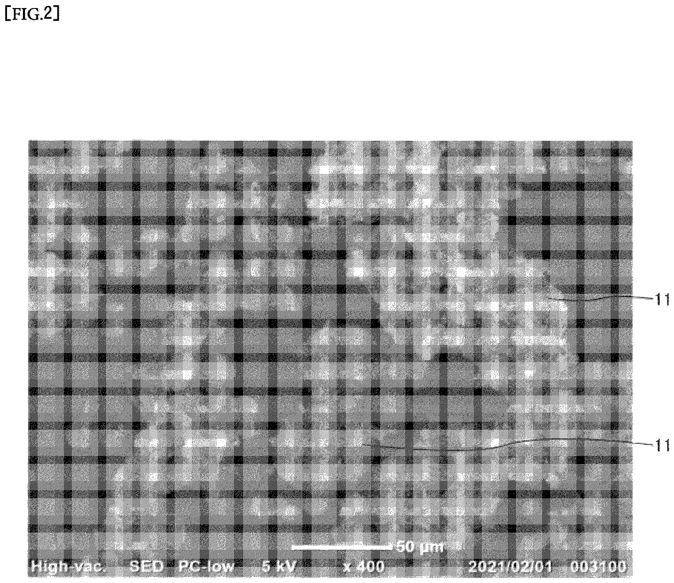

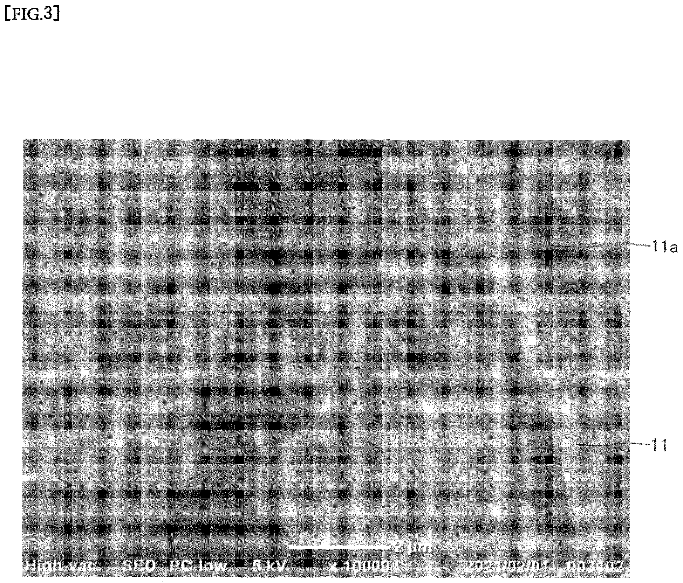

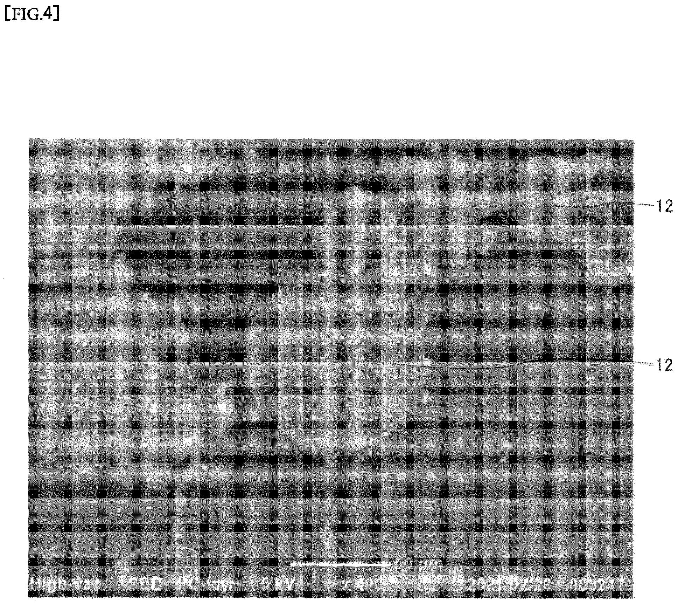

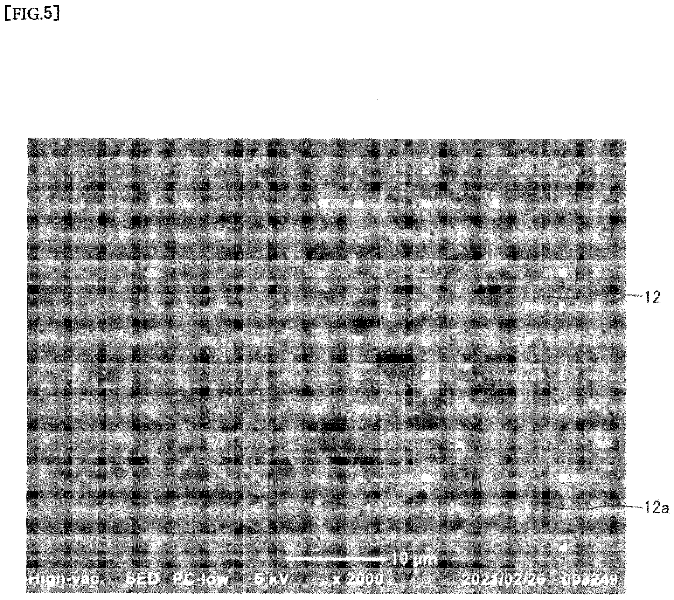

The cellulose particles 11, 12 produced by the method discussed above are shown in Figs. 2 to 5. The cellulose particles 11 shown in Figs. 2 and 3 were produced from a 2 mass% aqueous dispersion of unmodified fine cellulose fibers (ELLEX(registered trademark)-S) as a raw material, using the spray-type freeze granulator 1. The cellulose particles 11 were observed to have a number of pores 11a, which means that the cellulose particles 11 have a porous structure. The cellulose particles 12 shown in Figs. 4 and 5 were produced from a 2 mass% aqueous dispersion of modified fine cellulose fibers (ELLEX(registered trademark)-star) as a raw material, using the spray-type freeze granulator 1. The cellulose particles 12 were observed to have a number of pores 12a. The drying treatment was performed by vacuum drying in a vacuum dryer (EYELA FDU-2110 manufactured by TOKYO RIKAKIKAI CO., LTD.) with the frozen bodies kept stationary. The freeze granulation chamber 8 may be Cryochamber CS30 manufactured by PRECI CO., LTD., and the dryer unit 200 may be Barrel freeze-drying unit TFD-10 manufactured by PRECI CO., LTD.

### <Dispersion Liquid of Cellulose Particles>

The cellulose particles may be dispersed in an oil-based medium to prepare a dispersion liquid of the cellulose particles. The oil-based medium is not particularly limited as long as it is, for example, oil being fluid at 0 to 40 °C, i.e., liquid oil (in the form of liquid, gel, solid solution, foam, cream, or the like). The oil may be one or a combination of two or more members elected from the group consisting of, for example, hydrocarbons having 15 or more carbon atoms, fatty acids having 12 or more carbon atoms, alcohols having 6 or more carbon atoms, and dimethyl silicone. For example, one or a combination of two or more members may be selected and used from the group consisting of natural animal and vegetable oils and fats, such as jojoba oil, macadamia nut oil, avocado oil, evening primrose oil, mink oil, rapeseed oil, castor oil, sunflower seed oil, corn oil, cacao oil, palm oil, rice bran oil, olive oil, almond oil, sesame oil, safflower oil, soybean oil, camelia oil, Prunus armeniaca kernel oil, castor oil, mink oil, cottonseed oil, Japan wax, palm oil, palm kernel oil, egg-yolk oil, lanolin, and squalene; hydrocarbons, such as synthetic triglyceride, squalane, liquid paraffin, petrolatum, ceresin, microcrystalline wax, and isoparaffin; waxes, such as carnauba wax, paraffin wax, spermaceti, beeswax, candelilla wax, and lanolin; higher alcohols, such as cetanol, stearyl alcohol, lauryl alcohol, cetostearyl alcohol, oleyl alcohol, behenyl alcohol, lanolin alcohol, hydrogenated lanolin alcohol, hexyldecanol, and octyldodecanol; higher fatty acids, such as lauric acid, myristic acid, palmitic acid, stearic acid, behenic acid, isostearic acid, oleic acid, linoleic acid, linolic acid, oxystearic acid, undecylenic acid, lanolin fatty acid, hard lanolin fatty acid, and soft lanolin fatty acid; cholesterols, such as cholesteryl-octyldodecyl-behenyl, and derivatives thereof; esters, such as isopropyl myristate, isopropyl palmitate, isopropyl stearate, glycerol 2-ethylhexanoate, and butyl stearate; polar oils, such as diethylene glycol monopropyl ether, polyoxyethylene polyoxypropylene pentaerythritol ether, polyoxypropylene butyl ether, and ethyl linoleate; and silicones including various derivatives thereof, such as amino-modified silicone, epoxy-modified silicone, carboxy-modified silicone, carbinol-modified silicone, methacryl-modified silicone, mercapto-modified silicone, phenol-modified silicone, single-end reactive silicone, heterofunctional group-modified silicone, polyether-modified silicone, methylstyryl-modified silicone, alkyl-modified silicone, higher fatty acid ester-modified silicone, special modified hydrophilic silicone, higher alkoxy-modified silicone, higher fatty acid-containing silicone, and fluorine-modified silicone, more specifically, silicone resin, methylphenylpolysiloxane, methylpolysiloxane, octamethylcyclotetrasiloxane, decamethylcyclopentasiloxane, dodecamethylcyclohexanesiloxane, methylcyclopolysiloxane, octamethyltrisiloxane, decamethyltetrasiloxane, polyoxyethylene-methylpolysiloxane copolymers, polyoxypropylene-methylpolysiloxane copolymers, poly(oxyethylene-oxypropylene) methylpolysiloxane copolymers, methyl hydrogen polysiloxane, tetrahydro tetramethylcyclotetrasiloxane, stearoxymethylpolysiloxane, cetoxymethylpolysiloxane, methylpolysiloxane emulsion, highly-polymerized methylpolysiloxane, trimethylsiloxy silicate, cross-linked methylpolysiloxane, cross-linked methylphenylpolysiloxane, and cross-linked methylphenylpolysiloxane. The concentration of the cellulose particles contained in the dispersion liquid of the cellulose particles may be 0.1 to 20 mass%, preferably 0.5 to 10 mass%. At a concentration below 0.1 mass%, the cellulose particles are not sufficient in amount, and may not spread all over the dispersion liquid. At a concentration of the cellulose particles over 20 mass%, the viscosity of the dispersion liquid is too high, and its application is extremely limited.

The dispersion liquid of the cellulose particles may contain water and an emulsifier. In this case, the water separates from the oil. The separated dispersion liquid may be used as it is, but may be emulsified and used as an emulsion liquid. The emulsification may be carried out by dispersing with a known disperser (homogenizers or the like). The emulsion liquid is not strictly affected by the properties of an emulsifier (surfactants). This is characteristic to the emulsifier containing the cellulose particles of the present embodiment, and irrespective of the presence/absence of an emulsifier, the dispersion liquid of the cellulose particles are easily emulsified solely due to the presence of the cellulose particles. Emulsification is formation of micelles from oil, water, and an emulsifier, and an emulsion liquid is not separated into oil and water and is kept in the emulsified state due to the micelles being dispersed in the emulsion liquid. Though the precise mechanism is not known, it is assumed that the cellulose particles penetrate the micelles and integrated therewith to protect the micelles from being deteriorated in shape. In other words, the cellulose particles are assumed to function as a reinforcing material for the micelles. The proportion of the emulsifier in the dispersion liquid of the cellulose particles may be 0.1 to 10 mass%, preferably 0.2 to 8.0 mass%.

For emulsifying the dispersion liquid of the cellulose particles into an emulsion liquid, the mixing ratio of the oil and the water (oil : water) may be, for example, 99:1 to 1:99, preferably 95:5 to 5:95. As long as the cellulose particles are contained in the emulsion liquid, the emulsion liquid may either be water-in-oil or oil-in-water emulsion liquid. In a water-in-oil emulsion liquid, the mixing ratio of the oil and the water (oil : water) may be, for example, 99:1 to 51:49, preferably 95:5 to 51:49. In an oil-in-water emulsion liquid, the mixing ratio of the oil and the water (oil : water) may be, for example, 1:99 to 49:51, preferably 5:95 to 49:51. Or the emulsion liquid containing the cellulose particles may be an intermediate emulsion liquid between the water-in-oil and oil-in-water emulsion liquids, without strictly distinguishing the water-in-oil from oil-in-water emulsion liquid.

The emulsifier may be, for example, nonionic surfactant, anionic surfactant, cationic surfactant, amphoteric surfactant, or phospholipid. In particular, an ester-type or ester-ether type nonionic surfactant is preferably used and, for example, glycerin fatty acid esters, polyglycerin fatty acid esters, propylene glycol fatty acid esters, sorbitan fatty acid esters, or fatty acid esters of sorbitol, or alkylene glycol addition products of these esters, polyalkylene glycol fatty acid esters, sucrose fatty acid esters, polysorbate 20, polysorbate 60, polysorbate 80, polyoxyalkylene alkyl ethers, or polyoxyethylene alkylphenyl ethers may be used.

### EXAMPLES

### <Preparation in Test Examples and Comparative Examples>

### <Test Example 1>

Examples are discussed below. Production in Test Example 1 was as follows. Dispersion liquid of unmodified fine cellulose fibers (ELLEX(registered trademark)-S manufactured by DAIO PAPER CORPORATION) at 2 mass% concentration in water as a raw material was supplied to the spray-type freeze granulator to produce cellulose particles, which were taken as Test Example 1. The fine cellulose fibers had an average fiber diameter of 50 nm. In the course of the freezing treatment by atomizing the raw material in the spray-type freeze granulator to obtain frozen bodies as an intermediate, which was then vacuum-dried to obtain the cellulose particles, the fine cellulose fibers were subjected to the freezing treatment in Cryochamber CS30 manufactured by PRECI CO., LTD., and the resulting frozen bodies were dried in Barrel freeze-drying unit TFD-10 manufactured by PRECI CO., LTD. while swinging, until completely dried.

### <Test Example 2>

Production in Test Example 2 was as follows. The fine cellulose fibers in the same dispersion liquid as used in Test Example 1 used as a raw material, were supplied to Cryochamber CS30 manufactured by PRECI CO., LTD. to obtain frozen bodies as an intermediate, which were then vacuum-dried to obtain cellulose particles, which were taken as Test Example 2. For drying in a stationary state, the frozen bodies were vacuum dried in a vacuum dryer (EYELA FDU-2110 manufactured by TOKYO RIKAKIKAI CO., LTD.) with the frozen bodies kept stationary.

### <Test Example 3>

Production in Test Example 3 was as follows. Unmodified fine cellulose fibers (ELLEX(registered trademark)-S manufactured by DAIO PAPER CORPORATION) as used in Test Example 1 and a citric acid ester were mixed at a mixing ratio of 75% : 25% to obtain a mixture, which was dispersed at a 2 mass% concentration in water to obtain dispersion liquid. This dispersion liquid as a raw material was subjected to the freezing treatment in Cryochamber CS30 manufactured by PRECI CO., LTD., and the resulting frozen bodies were dried in Barrel freeze-drying unit TFD-10 manufactured by PRECI CO., LTD. while swinging, until completely dried. The cellulose particles obtained from the drying were taken as Test Example 3.

### <Test Example 4>

Production in Test Example 4 was as follows. Dispersion liquid of fine cellulose fibers of which hydroxyl groups had been modified into phosphorous ester groups (ELLEX(registered trademark)-star manufactured by DAIO PAPER CORPORATION) at a 0.5 mass% concentration in water as a raw material was subjected to the freezing treatment in Cryochamber CS30 manufactured by PRECI CO., LTD., and the resulting frozen bodies were dried in Barrel freeze-drying unit TFD-10 manufactured by PRECI CO., LTD. while swinging, until completely dried. The cellulose particles obtained from the drying were taken as Test Example 4. The fine cellulose fibers had an average fiber diameter of 4 nm.

### <Test Example 5>

Production in Test Example 5 was as follows. The same dispersion liquid as used in Test Example 4 was supplied as a raw material to Cryochamber CS30 manufactured by PRECI CO., LTD., and the resulting frozen bodies as an intermediate were vacuum dried to obtain cellulose particles, which were taken as Test Example 5. For drying in a stationary state, the frozen bodies were vacuum dried in a vacuum dryer (EYELA FDU-2110 manufactured by TOKYO RIKAKIKAI CO., LTD.) with the frozen bodies kept stationary.

### <Comparative Example 1>

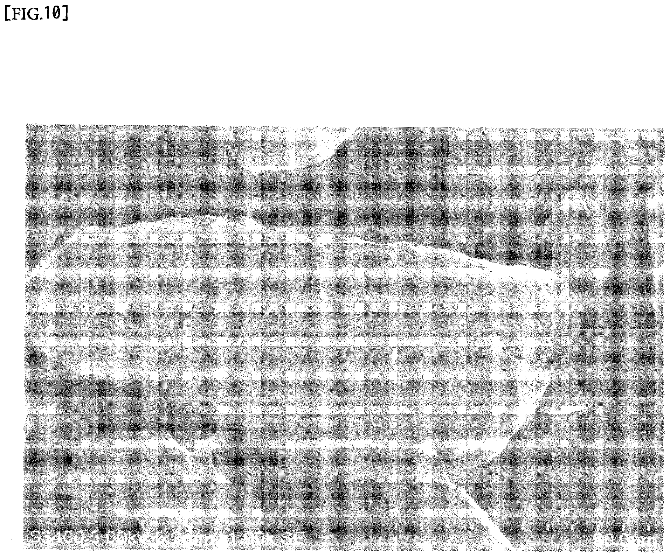

Production in Comparative Example 1 was as follows. Unmodified fine cellulose fibers (ELLEX(registered trademark)-S manufactured by DAIO PAPER CORPORATION) and glycerin (glycerin manufactured by FUJIFILM WAKO PURE CHEMICAL CORPORATION) were mixed at a mixing ratio of 71%: 29% to obtain a mixture, and the mixture liquid was supplied to a drum dryer to obtain a dried product through thermal drying, which was ground into cellulose particles having an average particle size of 53.1 µm, which was taken as Comparative Example 1. A SEM image of the particles of Comparative Example 1 is shown in Fig. 10. The particles of Comparative Example 1, compared to the cellulose particles of the present embodiment, were solid inside, and had a smaller specific surface area and a higher density.

### <Comparative Example 2>

In Comparative Example 2, cellulose particles were produced in the same way as in Comparative Example 1, except that the cellulose particles had an average particle size of 238.8 µm.

Physical properties of the products in Test Examples and Comparative Examples were determined. The physical properties determined were compressibility, loose bulk density, packed bulk density, specific surface area, moisture percentage, average particle size, median size, 10% cumulative diameter, and 90% cumulative diameter.

Compressibility is among the items used for calculation of Carr indices for fluidity, and was determined in accordance with ASTM D6393-99 "Measurement of Compressibility". The measurement was made using "Multiple Powder Characteristics Analyzer Multi Tester MT-02" manufactured by SEISHIN ENTERPRISE CO., LTD.

The specific surface area was determined in accordance with the BET multipoint method (N₂ adsorption BET method). The instruments used for the measurements were 3Flex manufactured by MICROMERITICS and Smart VacPrep (pretreatment system) manufactured by MICROMERITICS. The cellulose particles prepared in Test Examples and Comparative Examples were subjected to degassing treatment

(drying under reduced pressure) in the pretreatment system at 60 °C for 20 hours, and then to the measurements of the specific surface area by the N₂ adsorption BET method.

The apparatus used for the determination of the average particle size, median size, 10% cumulative diameter, and 90% cumulative diameter was Laser Scattering Particle Size Distribution Analyzer LA-960V2 (dry method) manufactured by HORIBA LTD.

The compositions of the raw materials in Test Examples and Comparative Examples are shown in Table 1, and the physical properties are shown in Table 2.

**Table 1**

| Composition of Raw Material (%) | Test Ex. 1 | Test Ex. 2 | Test Ex. 3 | Test Ex. 4 | Test Ex. 5 | Comp. Ex. 1 | Comp. Ex. 2 |
|---|---|---|---|---|---|---|---|
| Unmodified CNF | 100 | 100 | 75 | - | - | 71 | 71 |
| Modified CNF | - | - | - | 100 | 100 | - | - |
| Glycerin | - | - | - | - | - | 29 | 29 |
| Citric Acid Ester | - | - | 25 | - | - | - | - |

**Table 2**

| | Unit | Test Ex. 1 | Test Ex. 2 | Test Ex. 3 | Test Ex. 4 | Test Ex. 5 | Comp. Ex. 1 | Comp. Ex. 2 |
|---|---|---|---|---|---|---|---|---|
| Compressibility | % | 29% | 9% | 28% | 38% | 20% | 46% | 27% |
| Loose Bulk Density | mg/cm³ | 48.0 | 100 | 28.0 | 35.0 | 4.0 | 226.0 | 245.0 |
| Packed Bulk Density | mg/cm³ | 68.0 | 11.0 | 39.0 | 56.0 | 5.0 | 419.0 | 337.0 |
| Specific Surface Area | m²/g | 45.8 | 70.2 | 48.7 | 52.7 | 131.0 | 1.0 | 0.4 |
| Moisture Percentage | % | 6.3% | 7.2% | 7.8% | 11.8% | 20.8% | 6.3% | 6.5% |
| Average Particle Size | µm | 160.8 | 386.3 | 220.4 | 224.8 | 355.3 | 53.1 | 238.8 |
| Median Size | µm | 82.6 | 258.0 | 114.0 | 127.5 | 251.6 | 47.6 | 219.8 |
| 10% Cumulative Diameter | µm | 31.2 | 61.1 | 37.8 | 36.0 | 51.2 | 22.3 | 87.1 |
| 90% Cumulative Diameter | µm | 405.9 | 909.5 | 578.2 | 571.5 | 820.9 | 88.3 | 409.8 |

### <Emulsification Test>

The degree of emulsification of the produced cellulose particles was determined. Preparations in Test Examples and Comparative Examples were made of the compositions shown in Table 3.

**Table 3**

| | Test Example 12 | Comparative Example 12 | Comparative Example 13 | Comparative Example 14 |
|---|---|---|---|---|
| Fluid Paraffin | 80 | 80 | 80 | 80 |
| Purified Water | 19.4 | 19.4 | | 20 |
| Cellulose Particles (Test Example 2) | 0.6 | | | |
| Cellulose Particles (Comparative Example 2) | | 0.6 | | |
| 3% Aqueous Dispersion of Fine Cellulose Fibers | | | 20 | |
| Emulsifier (Surfactant) | 0.3 | 0.3 | 0.3 | 0.3 |
| Total | 100.3 | 100.3 | 100.3 | 100.3 |

| | | | | |
|---|---|---|---|---|
| Unit: part by mass | | | | |

### <Test Example 12>

To 80 parts by mass fluid paraffin, 0.3 parts by mass emulsifier (Polysorbate 80 manufactured by SHIZEN KESHOHIN KENKYUJO CO., LTD.) was added and stirred using a homogenizer (disperser, T-25 digital ULTRA-TURRAX (registered trademark) manufactured by IKA) at 3000 rpm for 30 seconds. To the resulting mass, 0.6 parts by mass cellulose particles of Test Example 2 were added and stirred using the same homogenizer at 5000 rpm for 30 seconds. To the resulting mass, 19.4 parts by mass water was added and stirred with the same homogenizer at 5000 rpm for 30 seconds, to obtain a product of Test Example 12.

### <Comparative Example 12>

To 80 parts by mass fluid paraffin, 0.3 parts by mass emulsifier was added and stirred using the homogenizer at 3000 rpm for 30 seconds. To the resulting mass, 0.6 parts by mass cellulose particles of Comparative Example 2 were added and stirred using the same homogenizer at 5000 rpm for 30 seconds. To the resulting mass, 19.4 parts by mass water was added and stirred with the same homogenizer at 5000 rpm for 30 seconds, to obtain a product of Comparative Example 12.

### <Comparative Example 13>

To 80 parts by mass fluid paraffin, 0.3 parts by mass emulsifier was added and stirred using the homogenizer at 3000 rpm for 30 seconds. To the resulting mass, 20 parts by mass 3% aqueous dispersion of unmodified fine cellulose fibers (ELLEX(registered trademark)-S manufactured by DAIO PAPER CORPORATION) was added and stirred using the same homogenizer at 5000 rpm for 30 seconds, to obtain a product of Comparative Example 13.

### <Comparative Example 14>

To 80 parts by mass fluid paraffin, 0.3 parts by mass emulsifier was added and stirred using the homogenizer at 3000 rpm for 30 seconds. To the resulting mass, 20 parts by mass water was added and stirred with the same homogenizer at 5000 rpm for 30 seconds, to obtain a product of Comparative Example 14.

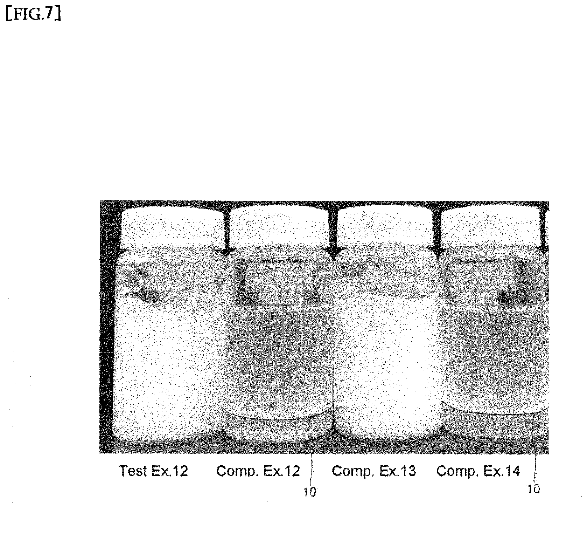

The products respectively obtained in Test Examples and Comparative Examples were transferred into capped bottles, stirred, and left to stand. After the lapse of 30 minutes, the dispersion liquids were observed. The results are shown in Fig. 7. The products of Test Example 12 and Comparative Example 13 were maintained in an emulsion liquid state, without any interface being observed. The products of Comparative Examples 12 and 14 were separated into fluid paraffin and water and the interface 10 was observed.

The products of Test Example 12 and Comparative Example 12 both contained cellulose particles, but with different bulk densities and specific surface areas. It is assumed that such difference is a factor affecting the emulsification.

### <Dispersibility Test 1>

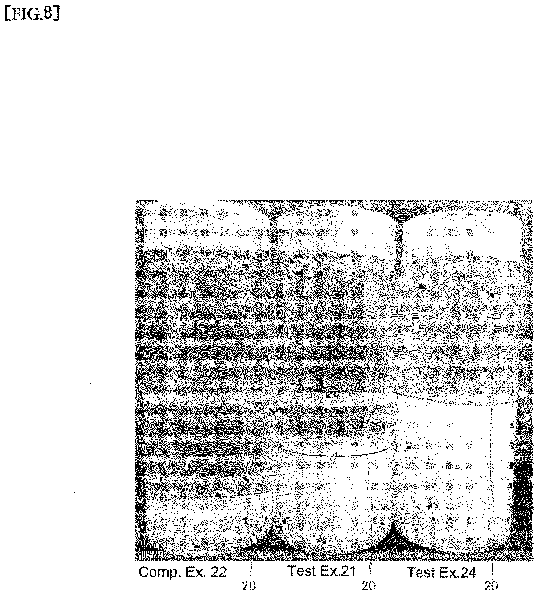

In Dispersibility Test 1, the degree of dispersibility of the produced cellulose particles was determined. Preparations in Test Examples and Comparative Examples were made of the compositions shown in Table 4. The products obtained in Test Examples and Comparative Examples were respectively dispersed using a homogenizer (T-25 manufactured by IKA) at 8000 rpm for 1 minute to obtain dispersion liquids. The resulting dispersions were respectively transferred into capped bottles and left to stand for 20 minutes. Images of the dispersions at this point of time are shown in Fig. 8. In the figure, reference numeral 20 refers to the interface of the cellulose particles.

**Table 4**

| | Test Example 21 | Test Example 24 | Comparative Example 22 |
|---|---|---|---|
| Dimethyl Silicone Oil | 98 | 98 | 98 |
| Cellulose Particles | 2 | 2 | 2 |
| Cellulose Particles Used | Test Example 1 | Test Example 4 | Comparative Example 2 |

| | | | |
|---|---|---|---|
| Unit: part by mass | | | |

### <Test Example 21>

To 98 parts by mass dimethyl silicone oil, 2 parts by mass cellulose particles of Test Example 1 was added to obtain a product of Test Example 21.

### <Test Example 24>

To 98 parts by mass dimethyl silicone oil, 2 parts by mass cellulose particles of Test Example 4 was added to obtain a product of Test Example 24.

### <Comparative Example 22>

To 98 parts by mass dimethyl silicone oil, 2 parts by mass cellulose particles of Comparative Example 2 was added to obtain a product of Comparative Example 22.

The interface 20 was sharrow in Test Examples 21 and 24 compared to in Comparative Example 22, showing good dispersibility.

### <Dispersibility Test 2>

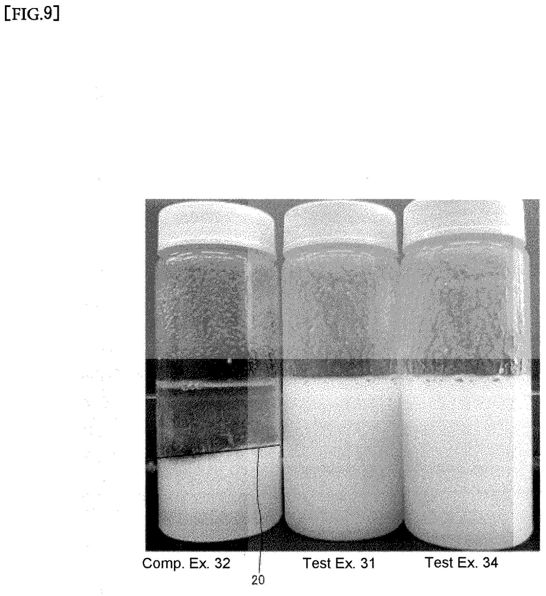

In Dispersibility Test 2, the degree of dispersibility of the produced cellulose particles was determined. Preparations in Test Examples and Comparative Examples were made of the compositions shown in Table 5. The products obtained in Test Examples and Comparative Examples were respectively dispersed using a homogenizer (T-25 manufactured by IKA) at 8000 rpm for 1 minute to obtain dispersion liquids. The resulting dispersions were respectively transferred into capped bottles and left to stand for 20 minutes. Images of the dispersions at this point of time are shown in Fig. 9. In the figure, reference numeral 20 refers to the interface of the cellulose particles.

**Table 5**

| | Test Example 31 | Test Example 34 | Comparative Example 32 |
|---|---|---|---|
| Fluid Paraffin | 98 | 98 | 98 |
| Cellulose Particles | 2 | 2 | 2 |
| Cellulose Particles Used | Test Example 1 | Test Example 4 | Comparative Example 2 |

| | | | |
|---|---|---|---|
| Unit: part by mass | | | |

### <Test Example 31>

To 98 parts by mass fluid paraffin, 2 parts by mass cellulose particles of Test Example 1 was added to obtain a product of Test Example 31.

### <Test Example 34>

To 98 parts by mass fluid paraffin, 2 parts by mass cellulose particles of Test Example 4 was added to obtain a product of Test Example 34.

### <Comparative Example 32>

To 98 parts by mass fluid paraffin, 2 parts by mass cellulose particles of Comparative Example 2 was added to obtain a product of Comparative Example 32.

No interface 20 was observed in Test Examples 31 and 34, whereas the interface 20 was observed in Comparative Example 32, demonstrating better dispersibility in Test Examples 31 and 34.

### <Miscellaneous>

The tests and measurements according to JIS, TAPPI, and others described herein were conducted at room temperature, particularly 25 °C, in atmospheric pressure, particularly 1 atm, unless otherwise specified.

### INDUSTRIAL APPLICABILITY

According to the present invention, there are provided the cellulose particles with improved dispersibility in oil-based liquid, and the dispersion liquid of the cellulose particles.

### DESCRIPTION OF REFERENCE SIGNS

11: cellulose particle
11a: pore in cellulose particle
12: cellulose particle
12a: pore in cellulose particle
10: interface
20: interface

## Claims

1. Cellulose particles comprising aggregates of fine cellulose fibers having an average fiber diameter of 1 to 1000 nm and an average fiber length of 0.01 to 1000 µm,
wherein the cellulose particles have a packed bulk density of 0.1 to 200 mg/cm³.

2. The cellulose particles according to claim 1, wherein the cellulose particles have an average particle size of 0.1 to 1000 µµ.

3. The cellulose particles according to claim 1, wherein the cellulose particles have a moisture percentage of 1 to 50%.

4. The cellulose particles according to claim 1, wherein the fine cellulose fibers are unmodified fine cellulose fibers having a moisture percentage of 100 to 500%.

5. The cellulose particles according to claim 1, wherein a compressibility of the cellulose particles is 50% or lower.

6. The cellulose particles according to claim 1, further comprising a plasticizer.

7. Dispersion liquid of the cellulose particles of any one of claims 1 to 6 dispersed in oil-based medium.

8. The dispersion liquid of the cellulose particles according to claim 7, further comprising water and an emulsifier.

9. The dispersion liquid of the cellulose particles according to claim 7, wherein the oil-based medium is liquid oil of one or a combination of two or more members selected from the group consisting of hydrocarbons having 15 or more carbon atoms, fatty acids having 12 or more carbon atoms, alcohols having 6 or more carbon atoms, and dimethyl silicone.

10. The dispersion liquid of the cellulose particles according to claim 7, wherein the dispersion liquid comprises the cellulose particles of any one of claims 1 to 6 at a 0.1 to 20 mass% concentration.
